# EUROPÄISCHE PATENTSCHRIFT

(11) **EP 1 060 116 B1**
(45) Veröffentlichungstag und Bekanntmachung des Hinweises auf die Patenterteilung: **19.06.2002**
(21) Anmeldenummer: 98924138.5
(22) Anmeldetag: 17.04.1998
(51) Int. Cl.: B65G 69/28

(54) **ÜBERLADEBRÜCKE MIT VERLADEBUCHT AUS VORGEFERTIGTEN STAHLBETONTEILEN ALS VERBUNDSYSTEM**
LOADING BRIDGE WITH A LOADING BAY MADE OF PREFABRICATED REINFORCED CONCRETE FORMING A COMPOSITE SYSTEM
PONT DE TRANSBORDEMENT AVEC AIRE DE CHARGEMENT CONSTITUEE D'ELEMENTS PREFABRIQUES EN BETON ARME FORMANT UN SYSTEME COMPOSITE

(30) Priorität: 02.03.1998 DE 29803587 U
(43) Veröffentlichungstag der Anmeldung: 20.12.2000
(73) Patentinhaber: Hochtief Fertigteilbau GmbH, 60489 Frankfurt am Main (DE); VAN WIJK NEDERLAND B.V., NL-8243 PJ Lelystad (NL)
(72) Erfinder: MÖGELE, Reinhard, NL-8252 JV Dronten (NL)
(74) Vertreter: Beil, Hans Christoph, Dr.
(86) Internationale Anmeldenummer: EP9802278
(87) Internationale Veröffentlichungsnummer: WO9944928

(56) Entgegenhaltungen:
- DE-A- 3 310 278
- DE-U- 9 401 242
- NL-A- 9 101 792

## Beschreibung

Gegenstand der Erfindung ist eine Verladestation mit den Merkmalen des Anspruchs 1.

Stationäre Überladebrücken sind in vielen Ausführungen bekannt, nämlich mit ausklappender oder ausfahrbarer Verlängerung.lhr Antrieb kann, wie allgemein bekannt, elektrohydraulisch, mechanisch oder pneumatisch erfolgen. Da stationäre Überladebrücken an der Rampenkante in den Boden einer Halle eingebaut werden müssen, sind geeignete Aussparungen erforderlich, um die Überladebrücke einbauen zu können.

Diese Aussparungen müssen dem Rahmentyp der Überladebrücke entsprechend ausgeführt sein. Der Hersteller der Überladebrücken stellt dafür Pläne der Ladebucht zur Verfügung, nach denen bauseits dieAussparungen gefertigt werden. Zum Betonieren der Aussparungen werden Schalungstische verwendet. Die Verantwortung für die Maßgenauigkeit obliegt der Baufirma. Dies führt manchmal zu Maßabweichungen der Verladebuchten, die den Einbau der Überladebrücken erschweren.

Um diese Probleme auszuschalten, können Stahlrahmen, sogenannte verlorene Schalungen oder ähnliche Schalungshilfen, vom Brückenhersteller geliefert werden, die für Maßgenauigkeit und Rechtwinkeligkeit der Verladebucht sorgen müssen.

Im Stahlbetonbau geht die Tendenz in Richtung vorgefertigter Teile, um schnell und preiswert die vorgenannten Verladebuchten zu erstellen. Diese Fertigteile brauchen nur auf die Fundamente gestellt und genau ausgerichtet zu werden und bilden dann die fertige Bucht für die Überladebrücke. Auch derartige sog. vorgefertigte Verladebuchten sind bereits bekannt.

Die Lösung der obengenannten Probleme gemäß Patentanspruch 1 ermöglicht, daß man die vorgefertigten Verladebuchten mit der Überladebrücke kombiniert, die Überladebrücke also im Fertigteilwerk bereits in das Fertigteil eingebaut und genau ausgerichtet und diese gesamte Einheit zur Baustelle transportiert und dort lagegenau montiert werden kann. Dies beschleunigt den Einbauvorgang enorm und verhindert auch etwaige Maßfehler beim Erstellen der Verladebucht.

Die Erfindung wird nachfolgend anhand einer Gestaltung für sogenannte Einhängerahmen beschrieben. Das sind Überladebrückenrahmen, die dreiseitig in Stahlbetonaussparungen hängen. Die Erfindung bezieht sich jedoch auf jeden beliebigen Rahmen, der eine derartige Fertigteilgruben-Überladebrücken-Kombination ermöglicht. Auch der Überladebrückentyp und seine Abmessungen sind für die Erfindung nicht relevant.

Anhand der beigefügten Zeichnungen wird die Erfindung näher erläutert, in denen
Figur 1 eine sogenannte vorgefertigte Verladebucht,
Figur 2 solche Verladebucht mit eingebauter Überladebrücke und
Figur 3 ein Befestigungsdetail zeigt.

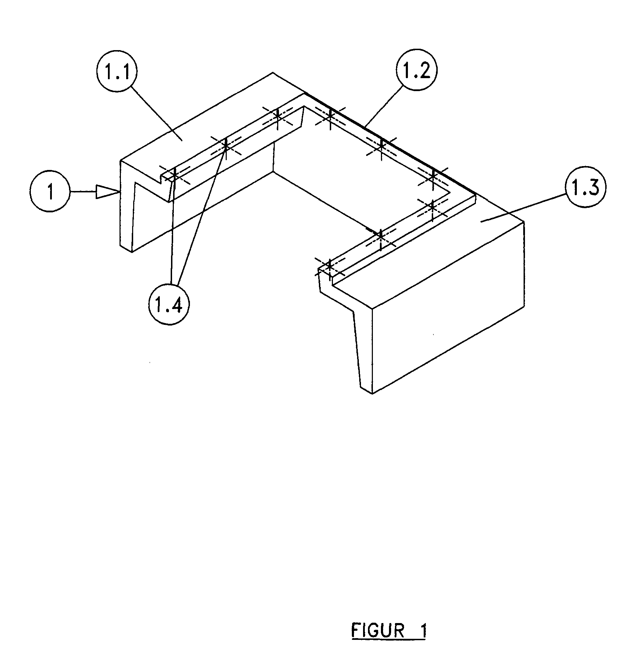

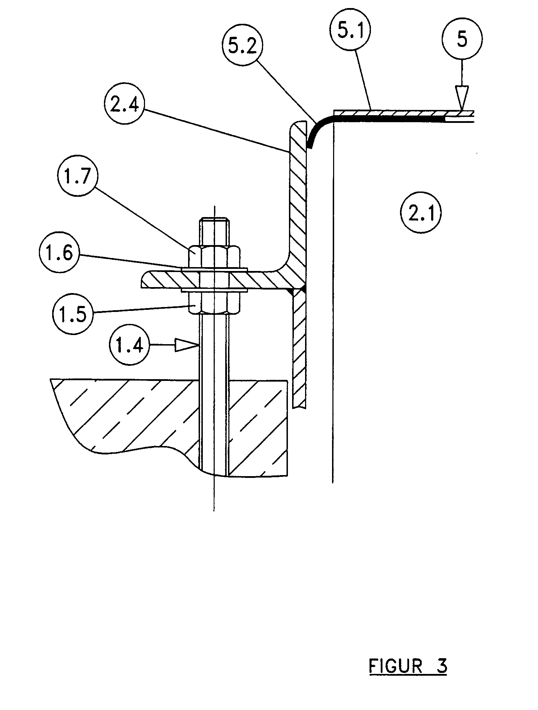

Figur 1 zeigt eine vorgefertigte Verladebuch (1), welche aus einem rechten Seitenteil (1.1), einem rückwärtigen Teil (1.2) und einem linken Seitenteil (1.3) besteht. Diese Teile sind ein Stahlbetonfertigteil, welches überstehende Befestigungsmittel (1.4) aufweist, an denen der Rahmen der Überladebrücke (2) befestigt wird. Vorzugsweise sind diese Befestigungsmittel Gewindestangen, da diese eine genaue Höheneinstellung des Überladebrückenrahmens ermöglichen und der Einbaurahmen (2.3) gut zwischen zwei Muttern (1.7) und (1.5) befestigt werden kann, wie Fig. 3 zeigt. Schließlich werden die im Notstoppfall eventuell auftretenden Zugkräfte gut in die Stahlbetonfertigteile übertragen. Zur Druckverteilung dienen dabei Scheiben (1.6).

Eine weitere bevorzugte Ausführungsform besteht darin, daß Halfenschienen in den Beton eingegossen werden und Halfenschrauben die genannten Gewindestangen ersetzen. Hierdurch wird eine Längsverschieblichkeit gewährleistet, was die Montage vereinfacht.

Ferner können Aussparungen für Leerrohre und die Leerrohre selbst mit der benötigten Verkabelung für die Überladebrücke bis zum Schaltkasten vorgesehen werden. Die Schaltkastenposition kann bei entsprechender Anordnung der Aussparungen bzw. Leerrohre nach den örtlichen Gegebenheiten trotz der Vorfertigung frei gewählt werden.

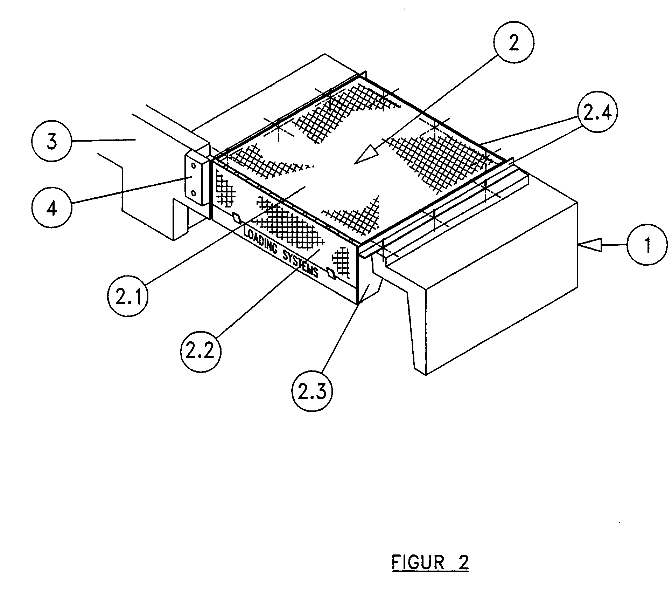

Figur 2 zeigt: eine Überladebrücke (2), die aus einer höhenverstellbaren Plattform (2.1), einer ausklappbaren oder ausfahrbaren Verlängerung (2.2) und einem Einbaurahmen (2.3) besteht. Der Einbaurahmen (2.3) weist in diesem Fall dreiseitig ein Winkelteil (2.4) auf, das mit Aussparungen versehen ist, welche genau auf die Befestigungsmittel (1.4) der vorgefertigten Verladebucht (1) passen.

Im Detail wird, wie aus Figur 3 ersichtlich, eine Mutter (1.5) auf jede Gewindestange als Befestigungsmittel (1.4) geschraubt, eine Scheibe (1.6) aufgelegt, die Überladebrücke (2) so aufgesetzt, daß die Gewindestangen durch die Aussparungen im Winkelteil (2.4) des Einbaurahmens (2.3) hindurchtreten. Das Winkelteil (2.4) stützt sich jetzt über Scheiben (1.6) auf den Muttern (1.5) der Gewindestangen ab. Nun erfolgt durch Drehen genannter Muttern (1.5) die genaue Höhenjustierung. Danach werden Scheiben (1.6) und Kontermuttern (1.7) auf den Gewindestangen angebracht und das Winkelteil (2.4) mit diesen Kontermuttern (1.7) festgeklemmt und somit gesichert. Vorzugsweise werden selbstsichernde Muttern verwendet. Ist der Rahmen (2.3) über das Winkelteil (2.4) an den Befestigungsmitteln (1.4) der Verladebucht (1) befestigt, ist das gewünschte Verbundsystem fertig und kann auf die Baustelle transportiert werden.

Um die Überladebrücke (2) vor Verschmutzung und Beschädigung zu schützen, wird die Plattform (2.1) und eventuell die Verlängerung (2.2) vorzugsweise mit einer Schutzplatte (5) abgedeckt. Diese Schutzplatte kann aus Holz, Stahlblech oder ähnlichem Material (5.1) bestehen und ist vorzugsweise mit der Plattform verschraubt. Weiter kann der Spalt zwischen Überladebrückenplattform (2.1) und dem Einbaurahmen (2.3) durch einen Streifen (5.1) aus elastischem Material, beispielsweise PVC, geschlossen werden, der unter die Schutzabdeckung gelegt und mit dieser auf der Überladebrückenplattform befestigt wird.

Da in der Regel meistens Frostschürzen (3) vor der Verladebucht angebracht werden müssen, steht die Überladebrücke (2) um Frostschürzentiefe in Rampenkantenrichtung vor.

Auf der Baustelle wird jetzt das Verbundsystem genau ausgerichtet. Abhängig vom Bauvorhaben werden nach dem Ausrichten die Frostschürzen (3) beidseitig angebracht. An diesen Frostschürzen (3) sind schon Schraubhülsen oder gleichwertige Vorrichtungen zum Anbringen der Gummistoßpuffer (4) angebracht, die Puffer (4) werden angeschraubt. Das obere Ende des Winkelteils (2.4) dient zusammen mit den in gleicher Ebene liegenden Oberkanten der Frostschürze (3) und der Gummistoßpuffer als Schalung für den einzubringenden Fußboden.

Die Montage des Schaltkastens an gewünschter Stelle und der Anschluß der Kabel komplettieren den Einbau. Die Überladebrücke ist dann betriebsbereit.

## Patentansprüche

1. In ein Gebäude zu integrierende Verladestation zum Be- und Entladen von Gütern aller Art, bestehend aus einer Überladebrücke (2) mit ein- und ausfahrbarer oder ein- und ausklappbarer Verlängerung (2.2) und einem Einbaurahmen (2.3) sowie einer diese Überladebrücke aufnehmenden Verladebucht (1),
**dadurch gekennzeichnet, daß**
1.1 die Verladebucht (1) aus einem Stahlbetonfertigteil mit dem rechten Seitenteil (1.1), dem rückwärtigen Teil (1.2) und dem linken Seitenteil (1.3) besteht,
1.2 die Überladebrücke (2) an ihrer Vorderseite um die Dicke der Frostschürzen (3) des Gebäudes über das vordere Ende der Verladebucht (1) hinausragt,
1.3 der Einbaurahmen (2.3) ein waagrechtes, vom senkrechten Rahmenteil nach außen sich erstreckendes Winkelteil (2.4) aufweist und
1.4 die Verladebucht (1) senkrecht angeordnete Befestigungsmittel (1.4) für den waagrechten Teil des Winkelteils (2.4) des Einbaurahmen aufweist.

2. Verladestation nach Anspruch 2, **dadurch gekennzeichnet, daß** die Befestigungsmittel (1.4) eine vertikale Ausrichtung des Einbaurahmens erlauben.

3. Verladestation nach Anspruch 2 oder 3, **dadurch gekennzeichnet, daß** die Befestigungsmittel (1,4) Gewindestangen sind, das Winkelteil (2.4) an den mit dem Ort der Gewindestangen korrespondierenden Stellen Aussparungen aufweist und auf den Gewindestangen für die vertikale Ausrichtung und Befestigung des Einbaurahmens (2.3) Muttern (1.5, 1.7) und Scheiben (1.6) angeordnet sind.

4. Verladestation nach einem der Ansprüche 1 bis 3, **dadurch gekennzeichnet, daß** die Befestigungsmittel (1.4) Halfenschrauben sind, die in Halfenschienen längsverschiebbar angebracht sind.

5. Verladestation nach Anspruch 1 bis 4 **dadurch gekennzeichnet, daß** in der Verladebucht (1) Leerrohre für die elektrische Verkabelung angeordnet sind.

6. Verladestation nach Anspruch 5, **dadurch gekennzeichnet, daß** die elektrische Verkabelung bereits verlegt ist.

7. Verladestation nach Anspruch 1 bis 6 **dadurch gekennzeichnet, daß** die Überladebrückenplattform (2.1) und eventuell die Verlängerung (2.2) eine Schutzabdeckung (5) aufweisen.

8. Verladestation nach Anspruch 7, **dadurch gekennzeichnet, daß** die Schutzabdeckung (5) eine mit Schrauben an der Überladebrücke befestigte Holzplatte (5.1) ist.

9. Verladestation nach Anspruch 7, **dadurch gekennzeichnet, daß** die Schutzabdeckung (5) ein mit Bohrschrauben an der Überladebrücke befestigtes dünnes Stahlblech (5.1) ist.

10. Verladestation nach Anspruch 8 bis 10, **dadurch gekennzeichnet, daß** seitlich und hinten zwischen Schutzabdeckung (5) und Überladebrückenplattform (2.1) je ein flexibler Dichungsstreifen (5.2), vorzugsweise aus PVC, eingeklemmt ist, der den Spalt zwischen Überladebrückenplattform (2.1) und dem Winkelteil (2.4) überdeckt.

## Claims

1. Loading station to be integrated into a building for loading and unloading goods of all types, consisting of a transfer bridge (2) with a draw-in and draw-out or fold-in and fold-out extension (2.2) and a mounting frame (2.3) and a loading bay (1) receiving this transfer bridge, **characterised in that**
1.1. the loading bay (1) consists of a reinforced concrete part with the right-hand lateral part (1.1), the rear part (1.2) and the left-hand lateral part (1.3),
1.2 the transfer bridge (2) projects at its front beyond the front end of the loading bay (1) by the thickness of the frost apron (3) of the building,
1.3 the mounting frame (2.3) has a horizontal angular part (2.4) extending outwards from the perpendicular frame part and
1.4. the loading bay (1) has perpendicularly arranged fastening means (1.4) for the horizontal part of the angular part (2.4) of the mounting frame.

2. Loading station according to claim 2, **characterised in that** the fastening means (1.4) allow vertical alignment of the mounting frame.

3. Loading station according to claim 2 or 3, **characterised in that** the fastening means (1.4) are threaded rods, the angular part (2.4) has recesses at the points corresponding to the position of the threaded rods, and nuts (1.5, 1.7) and washers (1.6) are arranged on the threaded rods for the vertical alignment and fastening of the mounting frame (2.3).

4. Loading station according to any one of claims 1 to 3, **characterised in that** the fastening means (1.4) are hollow-slot type screws, which are attached in hollow-slot type rails so as to be longitudinally displaceable.

5. Loading station according to claim 1 to 4, **characterised in that** reserve pipes for the electric cabling are arranged in the loading bay (1).

6. Loading station according to claim 5, **characterised in that** the electric cabling is already laid.

7. Loading station according to claims 1 to 6, **characterised in that** the transfer bridge platform (2.1) and optionally the extension (2.2) have a protective cover (5).

8. Loading station according to claim 7, **characterised in that** the protective cover (5) is a wooden board (5.1) fastened to the transfer bridge by screws.

9. Loading station according to claim 7, **characterised in that** the protective cover (5) is a thin steel sheet (5.1) fastened to the transfer bridge by drilling screws.

10. Loading station according to claims 8 to 10, **characterised in that**, laterally and at the rear between the protective cover (5) and transfer bridge platform (2.1), is clamped a respective flexible sealing strip (5.2), preferably made of PVC, which covers the gap between the transfer bridge platform (2.1) and the angular part (2.4).

## Revendications

1. Station de chargement à intégrer dans un bâtiment pour charger et décharger des articles de toute sorte, constituée par un pont de transbordement (2) comportant un prolongement (2.2) susceptible d'être rétracté et déployé par translation ou par rabattement et un cadre de montage (2.3), ainsi que par une aire de chargement (1) recevant ce pont de transbordement,
**caractérisée en ce que**
1.1 l'aire de chargement (1) est constituée par une pièce préfabriquée en béton armé comportant une partie latérale de droite (1.1), une partie arrière (1.2) et une partie latérale de gauche (1.3),
1.2 au niveau de sa face avant, le pont de transbordement (2) fait saillie de l'épaisseur de tabliers antigel (3) du bâtiment au-delà de l'extrémité avant de l'aire de chargement (1),
1.3 le cadre de montage (2.3) comprend une partie en équerre (2.4) horizontale s'étendant depuis la partie de cadre verticale vers l'extérieur, et
1.4 l'aire de chargement (1) comprend des moyens de fixation (1.4) agencés verticalement pour la partie horizontale de la partie en équerre (2.4) du cadre de montage.

2. Station de chargement selon la revendication 1, **caractérisée en ce que** les moyens de fixation (1.4) permettent une orientation verticale du cadre de montage.

3. Station de chargement selon l'une ou l'autre des revendications 1 et 2, **caractérisée en ce que** les moyens de fixation (1.4) sont des tiges filetées, **en ce que** la partie en équerre (2.4) présente des échancrures aux emplacements qui correspondent aux places des tiges filetées, et **en ce que** des écrous (1.5, 1.7) et des rondelles (1.6) sont agencés sur les tiges filetées pour l'orientation et la fixation verticale du cadre de montage (2.3).

4. Station de chargement selon l'une quelconque des revendications 1 à 3, **caractérisée en ce que** les moyens de fixation (1.4) sont des vis de Halfen qui sont agencées longitudinalement mobiles en translation dans des rails de Halfen.

5. Station de chargement selon les revendications 1 à 4, **caractérisée en ce que** des tubes vides pour le câblage électrique sont agencés dans l'aire de chargement (1).

6. Station de chargement selon la revendication 5, **caractérisée en ce que** le câblage électrique est déjà posé.

7. Station de chargement selon les revendications 1 à 6, **caractérisée en ce que** la plate-forme de pont de transbordement (2.1) et le cas échéant le prolongement (2.2) comprennent un recouvrement protecteur (5).

8. Station de chargement selon la revendication 7, **caractérisée en ce que** le recouvrement protecteur (5) est une plaque en bois (5.1) fixée au moyen de vis sur le pont de transbordement.

9. Station de chargement selon la revendication 7, **caractérisée en ce que** le recouvrement protecteur (5) est une tôle d'acier mince (5.1) fixée au moyen de vis autoperceuses sur le pont de transbordement.

10. Station de chargement selon les revendications 7 à 9, **caractérisée en ce qu'**une bande d'étanchéité flexible respective (5.2), de préférence en CPV, est serrée latéralement et à l'arrière entre le recouvrement protecteur (5) et la plate-forme de pont de transbordement (2.1) et coiffe l'intervalle entre la plate-forme de pont de transbordement (2.1) et la partie en équerre (2.4).
